# EUROPEAN PATENT SPECIFICATION

(11) **EP 0 327 947 B1**
(45) Date of publication and mention of the grant of the patent: **24.08.1994**
(21) Application number: 89101735.2
(22) Date of filing: 01.02.1989
(51) Int. Cl.: C08K 3/04, C08L 65/00

(54) **Black-pigmented polymeric compositions of matter**
Schwarz pigmentierte Polymerzusammensetzungen
Compositions de polymère contenant des pigments noirs

(30) Priority: 03.02.1988 US 151745; 27.07.1988 US 224631
(43) Date of publication of application: 16.08.1989
(73) Proprietor: HERCULES INCORPORATED, Wilmington Delaware 19894 (US)
(72) Inventor: Dougal, Alvin L., Jr., Milwaukee Wisconsin 53202 (US); Hara, Shigeyoshi, Iwakuni-shi Yamaguchi-ken (JP)
(74) Representative: Lederer, Franz, Dr.

(56) References cited:
- US-A- 4 507 453

## Description

This invention relates to colored polymeric compositions comprising units derived from the ring-opening metathesis-catalyst polymerization of one or more norbornene-type monomers, and a process for making them.

Norbornene-type monomers such as dicyclopentadiene, tricyclopentadiene and higher oligomers of dicyclopentadiene, norbornene, norbornadiene, tetracyclododecene and tetracyclododecadiene undergo ring-opening polymerization reactions in the presence of a metathesis catalyst to form high-modulus, high-impact-strength polymers, and copolymers and terpolymers when mixed. For example, U.S. Patent 4,400,340 describes the preparation of poly-(dicyclopentadiene) from the metathesis-catalyst ring-opening polymerization of dicyclopentadiene, and U.S. Patents 4,568,660, 4,689,380, 4,703,098 and 4,701,510 describe metathesis-catalyzed copolymerization and terpolymerization of various norbornene-type monomers.

US-A-4 507 453 describes a high impact strength, high modulus thermoset homopolymer which is formed by the metathesis-catalyzed polymerisation of dicyclopentadiene. It has been mentioned that the polymer may include various additives such as carbon black.

For aesthetic reasons, it may be desirable to provide thermoset polymeric materials made from norbornene-type monomers that are black, which conventionally would be done by painting. However, black-pigmentation of such polymers would be preferable to painting, and such pigmentation is believed to improve ultraviolet stability by absorbing and dispersing polymer-degradative radiation.

According to the invention, a polymeric composition comprising units derived from the ring-opening metathesis-catalyst polymerization of one or more norbornene-type monomers, is characterized in that it contains from about 0.05 to about 25 parts, per 100 parts of monomer by weight, of carbon black which contains less than 0.3% oxygen.

Preferably the composition contains from about 0.5 parts to about 25 parts by weight of the carbon black. The amount of carbon black employed obviously depends on the extent of pigmentation desired in the polymerized product, and also on such factors as the particle size of the particular carbon black employed and its effect on the viscosity of the monomeric material to be polymerized.

Ring-opening metathesis-catalyst polymerization of norbornene-type monomers for deriving the polymeric compositions according to the invention can be carried out by a variety of procedures and catalyst systems that are well-known, for instance, from U.S. Patent 4,400,340, which describes a preferred method known as reaction injection molding (RIM). In that method, two or more reactive liquid streams are mixed together and the combined streams are injected into a mold, where they quickly set up into a solid polymerised mass.

The streams comprise a two-part metathesis catalyst system, in which one of the streams contains a metathesis catalyst, preferably a tungsten halide or tungsten oxyhalide complex dissolved in a norbornene-type monomer or mixture of such monomers, and the other stream contains an alkylaluminum activator, preferably comprising an alkylaluminum iodide compound, and also a reaction rate moderator to delay catalyst activation, both dissolved in a norbornene-type monomer or mixture of such monomers. The reaction rate moderator delays the onset of the reaction for the time required to transfer the entire mixture into the mold, following which the reaction is substantially completed within about one-half minute or less.

Also according to the invention, a process of polymerizing one or more norbornene-type monomers by a ring-opening metathesis-catalyst polymerization, is characterized in that the monomer or monomers is polymerized in the presence of carbon black which contains less than 0.3% oxygen, and preferably has been prepared by a thermal decomposition process, and the amount of carbon black is from about 0.05 parts to about 25 parts by weight per 100 parts of norbornene-type monomer.

Preferably, the norbornene-type monomer is dicyclopentadiene, norbornene, norbornadiene, a trimer or higher oligomer of dicylcopentadiene, or an unsubstituted or substituted alkyl derivative of tetracyclododecene or tetracyclododecadiene, or more than one of them.

The carbon black can be placed in suspension by mixing it with one or more of the reactive streams in the (RIM) method, such as the metathesis catalyst-monomer stream or the activator-monomer stream or both, at any point prior to the combination and subsequent polymerization of the monomer streams.

Additives known to improve impact strength or other properties of polymers derived from norbornene-type monomers, copolymers or terpolymers can be incorporated into the polymeric products of the present invention. For example, a hydrocarbon elastomer such as butyl rubber, polyisoprene, polybutadiene, polyisobutylene, a styrene-butadiene block or random rubber, an ethylene-propylene copolymer or an ethylene-propylene-diene terpolymer can be formulated with the monomer-containing reactive streams prior to polymerization.

The term "carbon black" as used herein refers to a family of industrial products that are essentially elemental carbon. In general, carbon black is manufactured from liquid or gaseous hydrocarbons by partial or incomplete combustion processes involving flames, examples of which include lamp blacks, channel blacks and furnace blacks, or by thermal decomposition processes in the absence of air or flames. Examples of carbon blacks from thermal decomposition processes include thermal carbon blacks, made by endothermic decomposition, and acetylene blacks, made by exothermic decomposition.

Most carbon blacks produced via partial combustion processes contain significant amounts of chemically combined surface oxygen and oxygen compounds, in addition to varying amounts of moisture, sulfur and inorganic salts. Oxygenated impurities, moisture and inorganic salts that have been absorbed or absorbed on the carbon black surface have deleterious effects on the reactivity of metathesis-catalyst systems by causing a sharp loss in the shelf-life stability of the carbon black-containing-component of the metathesis-catalyst system. This is evidenced by severely depressed polymerization reaction rates involving that component. Further, the presence of such oxygenated compounds and inorganic salts results in dramatically increased surface activity and hygroscopicity of carbon blacks produced by partial combustion methods, making them highly resistant to dispersion in the highly hydrophobic mixtures used in metathesis-catalyst polymerization systems.

Carbon blacks containing oxygenated impurities can be freed of such impurities and rendered useful as fillers or pigments in metathesis-catalyst polymerization systems by a heat treatment at about 250 to 500°C for about 4 to 7 hours in absence of oxygen. Oxygenated impurities can also be removed by washing such carbon blacks with an aluminum-alkyl compound of the type employed as catalyst activators in metathesis-catalyst polymerization.

In thermal decomposition processes, carbon blacks are formed with the generation of hydrogen in the absence of air or oxygen. Carbon blacks thus formed are more highly carbonized, with far less tendency to absorb moisture than carbon blacks formed from partial combustion processes, and are substantially free of oxygen. Typically such carbon blacks contain less than about 0.3% oxygen, and contain 99% or more elemental carbon when formed. They therefore need not be subjected to any heat treatment or washing steps in order to avoid deleterious effects on shelf-life stability or on the efficiency of metathesis-catalyst systems, even when stored for extended periods prior to mixing and polymerization. Further, substantially oxygen-free carbon blacks are easily dispersed in the non-polymerized catalyst system components, without the use of the high-shear mixing devices such as ultrasonic mixers that are needed to disperse carbon black containing absorbed oxygen.

Any of the various grades and industry types of thermal and acetylene carbon blacks from thermal decomposition processes are preferred for use herein as these can be used without any post-preparation heat treatment or washing. These include carbon blacks identified by ASTM classifications N880 FT-FF (fine thermal black, free flowing), N881 FT (fine thermal black), N990 MT-FF (medium thermal black, free flowing), N907 MT-NS-FF (medium thermal black, nonstaining, free flowing), N908 MT-NS (medium thermal black, nonstaining) and N991 MT (medium thermal black), as well as Shawinigan acetylene carbon black available from the Chevron Chemical Company.

The different grades of such carbon blacks can be distinguished by their different physical properties, such as average particle diameter, surface area, pH, amount of volatile or residual hydrocarbon contained therein, and material composition including percentages of carbon, hydrogen, sulfur and oxygen, which can affect surface activity and moisture adsorption. Factors other than material composition generally are not critical to the selection of carbon blacks useful in this invention. However, for ease of dispersion in norbornene-type-monomer-containing reactive streams, grades of carbon blacks from thermal decomposition processes that are more highly carbonized than other grades and correspondingly are of lower surface activity and moisture adsorption are especially preferred in this invention. Examples of such grades include the Shawinigan acetylene carbon black available from Chevron Chemical Company, which is among the purest forms of carbon blacks manufactured from thermal decomposition methods, and has a carbon content of 99.7% or higher and very low surface activity and moisture adsorptivity.

The method and order of addition of the substantially oxygen-free carbon black to the reactive streams comprising the metathesis-catalyst system is not critical to the instant invention. Said carbon blacks can be added to any or all of the reactive streams and easily dispersed therein simply by agitation or by mixing with ordinary mixing devices. If desired, the carbon black can first be dispersed in a hydrocarbon elastomer that is then incorporated into a reactive stream.

The following examples more fully illustrate preferred embodiments of the instant invention and include comparisons with methods that are not according to the invention because they use oxygen-containing carbon blacks.

### Example 1

The following example illustrates the unexpected superior compatibility of carbon blacks manufactured by thermal decomposition processes with metathesis catalyst systems relative to carbon blacks prepared from partial combustion methods.

Catalyst component stability tests are performed using a two-part metathesis catalyst system in the ring-opening polymerization of dicyclopentadiene monomer. A metathesis catalyst activator component-monomer reactive stream (A) is prepared by adding 20 ml of dioctyl aluminum iodide (0.222M) to 200 ml of dicyclopentadiene. A metathesis catalyst component-monomer reactive stream (B) is prepared by adding 20 ml of 0.074 molar tungsten hexachloride-tungsten oxytetra-chloride complex solution (in toluene) to 200 ml of dicyclopentadiene. Preparation of both mixtures was carried out in nitrogen sparged bottles.

To determine compatibility of the carbon black with the reactive components, 5.2 grams (2.6 wt. %) of the blacks were dispersed in separate 200 ml aliquots A and B component streams. These were then allowed to sit for varying periods of time at room temperature. Periodically, an aliquot of the component containing carbon black is mixed with an aliquot of activator component containing no carbon black at 32°C and allowed to polymerize. At the same time an aliquot of the activator component containing carbon black is mixed with an aliquot of catalyst component containing no carbon black at 32°C and allowed to polymerize. Each time a control is run wherein no carbon black is present in either component. In all cases, the formulation levels in the mixture of components is 1000/0.5/1.5 mole ratio of dicyclopentadiene/tungsten/-aluminium and 1.3 wt. % of carbon black.

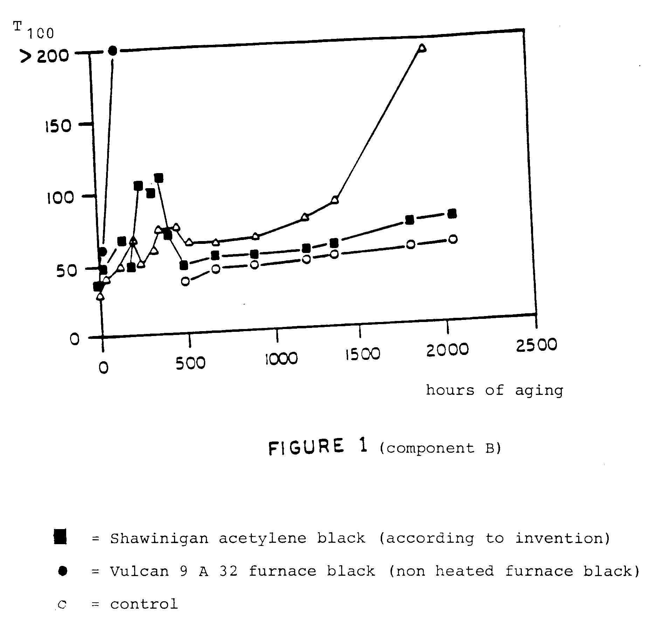

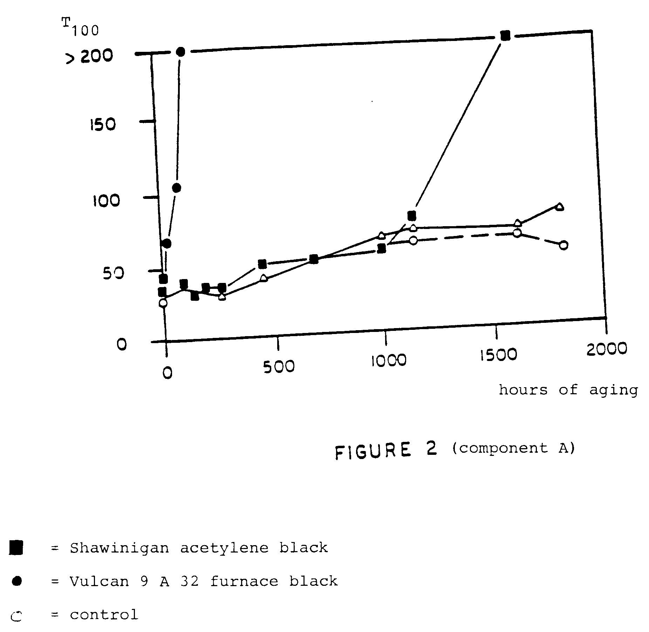

Each polymerization vessel wherein components A and B are mixed is fitted with a thermocouple, and the time is determined for the temperature of the ensuing metathesis catalyzed exothermic polymerization reaction to go from approximately 32°C at the point of mixture (t₀) to 100°C (T₁₀₀). The results of this testing are illustrated in Figures 1 and 2 where T₁₀₀ (the y-axis) is plotted against hours of aging. In Figures 1 and 2 the squares represent Shawinigan acetylene black (Chevron Chemical company), the solid circles represent Vulcan 9A 32 furnace black (Cabot Corporation) and the outlined circle represents the control. Figure 1 is a stability study of Component B and Figure 2 is a stability study of Component A. The extremely long T₁₀₀ times exhibited by the non-heated furnace black indicates that that material is destructive of both catalyst and activator activity. By contrast, the T₁₀₀ time of either component remains low, similar to that of the control, for relatively long periods of time when formulated with blacks that are free of oxygen according to this invention.

### Example 2

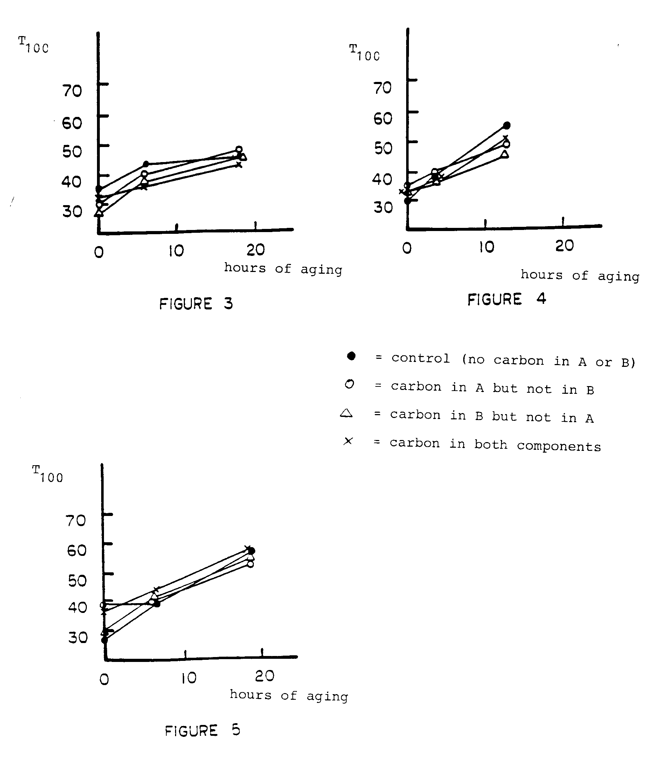

Additional catalyst component stability tests are performed using the procedure set out in Example 1, except that various types of carbon black at 2.5 wt. % from thermal decomposition processes are substituted for Shawinigan acetylene carbon black. The results are indicated by Figures 3 to 5. In Figure 3 the carbon black is Asahi Thermal (FT)(Asghi Carbon), in Figure 4 the carbon black is Denka Black (acetylene black)(Denki Kagaku) and in Figure 5 the carbon black is SEVACARB MT-CI (MT)(Columbian Carbon). In Figures 3 to 5, the solid circles represent the control, with no carbon in the A or in the B component. The outlined circles represent carbon in the A component, but not in the B component. The triangles represent carbon in the B component, but not in the A component. The X's represent carbon in both components.

### Example 3

Specimens of catalyst and activator component are prepared using the same molar ratios of dicyclopentadiene, tungsten and aluminum as are reported in Example 1. To the catalyst component is added 0.2, 0.4 and 2.5% by weight of Shawinigan thermal black, based on weight of dicyclopentadiene. This material, along with a control containing no carbon black, are polymerized by mixing it with the activator component and immediately injecting the mixture into a plaque mold. T₁₀₀ time is essentially the same for all samples.

Physical property data for all specimens is reported in the following table.

| Carbon Black Content | 0% | 0.1% | 0.2% | 1.25% |
|---|---|---|---|---|
| Heat Distortion Temp. | 101.5 | 96.2 | 96.5 | 99.8 |
| Tg (DMA) | 139 | 141 | 137 | 140 |
| Notched Izod 23°C | 50.5 | 50.7 | 51.4 | 47 |
| Impact Strength 0°C | 42.9 | 42.7 | 43.2 | 37 |
| Impact Strength 30°C | 29.7 | 28.3 | 28.5 | 26 |
| Flex Modulus | 17.700 | 17.600 | 17.600 | 18.190 |
| Flex Strength | 718 | 680 | 677 | 699 |

From the above, it can be seen that physical properties are not materially affected by the presence of carbon black at the levels employed here.

## Claims

1. A polymeric composition comprising units derived from the ring-opening metathesis-catalyst polymerization of one or more norbornene-type monomers and containing carbon black, characterized in that said polymerization has been carried out in the presence of from 0.05 to 25 parts, per 100 parts of monomer by weight, of carbon black which contains less than 0.3% oxygen.

2. A polymeric composition as claimed in claim 1, further characterized in that the composition contains from 0.5 parts to 25 parts by weight of the carbon black.

3. A polymeric composition as claimed in claim 2, further characterized in that the carbon black is thermal carbon black or acetylene carbon black.

4. A polymeric composition as claimed in claims 1 or 2, further characterized in that the carbon black has been prepared by a partial combustion process and has been subjected to a heat treatment to remove oxygenated impurities.

5. A polymeric composition as claimed in any of the preceding claims, further characterized in that the monomer or monomers from which the polymeric units are derived are dicyclopentadiene, norbornene, norbornadiene, a trimer or higher oligomer of dicyclopentadiene, or an unsubstituted or substituted alkyl derivative of tetracyclododecene or tetracyclododecadiene.

6. A process for making a polymeric composition as claimed in any of claims 1 to 5, by polymerizing one or more norbornene-type monomers by a ring-opening metathesis-catalyst polymerization, characterized in that the monomer or monomers are polymerized in the presence of carbon black that has been prepared by a thermal decomposition process and which contains less than 0.3% oxygen, the amount of carbon black present being from 0.05 parts to 25 parts by weight per 100 parts of the norbornene-type monomer.

7. A process as claimed in claim 6, further characterized in that the monomer or monomers are dicyclopentadiene, norbornene, norbornadiene, a trimer or higher oligomer of dicyclopentadiene, or an unsubstituted or substituted alkyl derivative of tetracyclododecene or tetracyclododecadiene.

8. A process as claimed in claim 6 or 7, further characterized in that the polymerization of the monomer or monomers is carried out by reaction injection molding.

## Patentansprüche

1. Polymere Zusammensetzung, enthaltend von der Ringöffnungsmetathese-Katalysatorpolymerisation von einem oder mehreren Monomeren vom Norbornen-Typ hergeleitete Einheiten und enthaltend Ruß, **dadurch gekennzeichnet**, daß die Polymerisation in Gegenwart von 0,05 bis 25 Gewichtsteilen, pro 100 Gewichtsteilen des Monomeren, Ruß durchgeführt wird, der weniger als 0,3 % Sauerstoff enthält.

2. Polymere Zusammensetzung nach Anspruch 1, **dadurch gekennzeichnet**, daß die Zusammensetzung von 0,5 bis 25 Gewichtsteile an Ruß enthält.

3. Polymere Zusammensetzung nach Anspruch 2, **dadurch gekennzeichnet**, daß der Ruß Thermalruß oder Acetylenruß ist.

4. Polymere Zusammensetzung nach einem der Ansprüche 1 und 2, **dadurch gekennzeichnet**, daß der Ruß durch ein partielles Verbrennungsverfahren hergestellt und einer Hitzebehandlung zur Entfernung von oxygenierten Verunreinigungen unterworfen worden ist.

5. Polymere Zusammensetzung nach einem der Ansprüche 1 bis 4, **dadurch gekennzeichnet**, daß das Monomere oder die Monomeren, aus welchen die polymeren Einheiten abgeleitet sind, Dicyclopentadien, Norbornen, Norbornadien, ein Trimeres oder ein höheres Oligomeres von Dicyclopentadien, oder ein nichtsubstituiertes oder substituiertes Alkylderivat von Tetracyclododecen oder Tetracyclododecadien sind.

6. Verfahren zur Herstellung einer polymeren Zusammensetzung nach einem der Ansprüche 1 bis 5 durch Polymerisieren von einem oder mehreren Monomeren vom Norbornen-Typ durch eine Ringöffnungsmetathese-Katalysatorpolymerisation, **dadurch gekennzeichnet**, daß das Monomere oder die Monomeren in Gegenwart von Ruß polymerisiert sind, der durch ein thermisches Zersetzungsverfahren hergestellt worden ist und der weniger als 0,3 % Sauerstoff enthält, wobei die Menge an vorhandenem Ruß im Bereich von 0,05 bis 25 Gewichtsteilen pro 100 Teile des Monomeren vom Norbornen-Typ liegt.

7. Verfahren nach Anspruch 6, **dadurch gekennzeichnet**, daß das Monomere oder die Monomeren Dicyclopentadien, Norbornen, Norbornadien, ein Trimeres oder höheres Oligomeres von Dicyclopentadien, oder ein nichtsubstituiertes oder substituiertes Alkylderivat von Tetracyclododecen oder Tetracyclododecadien sind.

8. Verfahren nach einem der Ansprüche 6 und 7, **dadurch gekennzeichnet**, daß die Polymerisation des Monomeren oder der Monomeren durch Reaktionsspritzgießverfahren durchgeführt wird.

## Revendications

1. Composition polymère comprenant des motifs dérivés de la polymérisation à catalyseur de métathèse et par ouverture de cycle d'un ou plusieurs monomères de type norbornène et contenant du noir de carbone, caractérisée en ce que ladite polymérisation a été effectuée en présence de 0,05 à 25 parties, pour 100 parties en poids de monomère, de noir de carbone qui contient moins de 0,3% d'oxygène.

2. Composition polymère selon la revendication 1, caractérisée de plus en ce que la composition contient de 0,5 partie à 25 parties en poids du noir de carbone.

3. Composition polymère selon la revendication 2, caractérisée de plus en ce que le noir de carbone est un noir de carbone thermique ou un noir de carbone d'acetylène.

4. Composition polymère selon la revendication 1 ou 2, caractérisée de plus en ce que le noir de carbone a été préparé par un procédé de combustion partielle et a été soumis à un traitement à la chaleur pour éliminer les impuretés oxygénées.

5. Composition polymère selon l'une quelconque des revendications précédentes, caractérisée de plus en ce que le ou les monomères, dont les motifs polymères sont dérivés, sont le dicyclopentadiène, le norbornène, le norbornadiène, un trimère ou un oligomère supérieur de dicyclopentadiène, ou un dérivé alkylique substitué ou non substitué de tétracyclodo-décène ou de tétracyclododécadiène.

6. Procédé pour préparer une composition polymère selon l'une quelconque des revendications 1 à 5, en polymérisant un ou plusieurs monomères de type norbornène à l'aide d'une polymérisation à catalyseur de métathèse par ouverture de cycle, caractérisé en ce que le ou les monomères sont polymérisés en présence de noir de carbone qui a été préparé par un procédé de décomposition thermique et qui contient moins de 0,3% d'oxygène, la quantité de noir de carbone présente étant de 0,05 partie à 25 parties en poids pour 100 parties de monomère de type norbornène.

7. Procédé selon la revendication 6, caractérisé de plus en ce que le ou les monomères sont le dicyclopentadiène, le norbornène, le norbornadiène, un trimère ou un oligomère supérieur de dicyclopentadiène, ou un dérivé alkylique substitué ou non substitué de tétracyclododécène ou de tétracyclododécadiène.

8. Procédé selon la revendication 6 ou 7, caractérisé de plus en ce que la polymérisation du ou des monomères est effectuée par moulage réactif par injection.
